# EUROPEAN PATENT SPECIFICATION

(11) **EP 1 698 999 B1**
(45) Date of publication and mention of the grant of the patent: **14.11.2018**
(21) Application number: 05809518.3
(22) Date of filing: 28.11.2005
(51) Int. Cl.: G06K 17/00, B31D 1/02, G06K 19/07, G09F 3/00, G06K 19/077

(54) **APPARATUS AND METHOD FOR INSPECTING RFID LABEL**
VORRICHTUNG UND VERFAHREN ZUM UNTERSUCHEN EINES RFID-LABELS
APPAREIL ET PROCEDE D'INSPECTION D'ETIQUETTES RFID

(30) Priority: 07.12.2004 JP 2004354690
(43) Date of publication of application: 06.09.2006
(73) Proprietor: Sato Holdings Kabushiki Kaisha, Meguro-ku Tokyo 153-0064 (JP)
(72) Inventor: SUZUKI, Hiroyuki, Shibuya-ku, Tokyo 1500013 (JP)
(74) Representative: Abel & Imray
(86) International application number: PCT/JP2005/021828
(87) International publication number: WO 2006/062002

(56) References cited:
- WO-A1-01/61646
- GB-A- 2 401 094
- JP-A- 2003 076 947
- JP-A- 2004 203 453
- JP-A- 2004 287 799
- JP-A- 2004 287 799

## Description

### BACKGROUND OF THE INVENTION

### 1. Field of the Invention

The present invention relates to an inspection apparatus and an inspection method for inspecting an RFID label sheet in which an RFID label encasing an RFID tag is temporarily adhered to a strip-form backing sheet at regular intervals.

### 2. Description of the Related Art

In recent years, RFID (Radio Frequency Identification) tags having an in-built IC chip and antenna, which enable electrical, non-contact reading and writing of information, have been developed to facilitate inventory management, product sales management, and so on. An RFID tag is capable of storing a large volume of information on the in-built IC chip, and of transmitting and receiving information wirelessly (through electromagnetic induction) and in non-contact fashion. Moreover, since the RFID tag is difficult to counterfeit, it is advantaged in terms of security. This type of RFID tag is encased in a sheet of paper, for example, and used as an RFID label.

In an RFID label manufacturing apparatus, RFID tags are temporarily adhered to abacking sheet at predetermined intervals, and printing paper is affixed to the upper surface of the RFID tags. In this state, the RFID tags are conveyed, whereupon die cutting is performed on the RFID tags and printing paper. The RFID label is constituted by the cut RFID tag and printing paper (see Japanese Unexamined Patent Application Publication 2002-72886, Japanese Unexamined Patent Application Publication 2002-134635, Japanese Unexamined Patent Application Publication 2002-279389, Japanese Unexamined Patent Application Publication 2002-347143, and Japanese Unexamined Patent Application Publication 2003-6596, for example).

In this type of RFID label manufacturing apparatus, a large number of tension rollers are used on the RFID tag conveyance path to enhance the conveyance precision, affixation precision, and so on. As a result, tension and pressure are applied to the RFID tag and static electricity is generated by friction between sheets, possibly causing damage to the IC chip and defects in the RFID label. To solve this problem, a method has been proposed for detecting defects occurring in an RFID label during the RFID label manufacturing process (see Japanese Unexamined Patent Application Publication 2004-86785, for example).

However, with this conventional method, a defect in the RFID label is merely detected, and an operator has to peel away the defective RFID label and replace it with a non-defective RFID label manually, leading to a decrease in manufacturing efficiency. Further, if this replacement operation is not performed during the manufacturing process, the defective RFID label is sent as is to the site at which the RFID labels are affixed to goods and the like, leading to a decrease in yield percentage. Moreover, an operator at the affixation site must peel away and dispose of the defective RFID label manually, and also create and affix a normal RFID label, leading to a decrease in the efficiency of the affixation operation. JP2004287799 discloses an apparatus and method for inspecting a roll of RFID labels, removing defective labels to a predetermined mount and then removing a corresponding number of non-defective labels to the predeterminedmount. The vacant spaces left by the removal of the defective labels are then filled with the non-defective labels that were transferred to the predetermined mount. Only a single roll of RFID labels is required and the above steps take place as various stages in which the direction of travel of the roll of labels is repeatedly changed.

### SUMMARY OF THE INVENTION

The present invention has been designed in order to solve the problems of the prior art, such as those described above, and it is an object thereof to provide an RFID label inspection apparatus and an RFID label inspection method with which an improvement in yield percentage and improvements in manufacturing efficiency and operating efficiency can be achieved.

An RFID label inspection apparatus according to the present invention is used to inspect an RFID label sheet in which an RFID label encasing an RFID tag is temporarily adhered to a strip-form backing sheet at regular intervals, and comprises: a conveyance path for the label sheet; RFID label quality determining means for determining the quality of the RFID label; RFID label peeling means for peeling the RFID label away from the backing sheet when the RFID label is determined to be defective by the RFID label quality determining means; and RFID label temporary adhering means for temporarily adhering a replacement RFID label to the backing sheet in a former temporary adhesion position of the RFID label peeled away by the RFID label peeling means; wherein the RFID label quality determining means, the RFID label peeling means, and the RFID label temporarily adhering means are disposed in sequence from the upstream side of the conveyance path characterized in that said RFID label peeling means comprises a first roller (108) having a protrusion formed in a predetermined position on an outer peripheral portion thereof, and said RFID label is peeled away from said backing sheet by rotating said first roller such that said protrusion is pressed against a rear surface of said RFID label sheet.

By means of this constitution, the defective RFID label is peeled away from the backing sheet and the replacement RFID label is temporarily adhered to the position from which the defective RFID label has been peeled away. As a result, the RFID label yield percentage can be improved, and since an operator no longer needs to perform an operation to peel away the defective RFID label manually, improvements in manufacturing efficiency and operating efficiency can also be achieved.

Further, in the RFID label inspection apparatus according to the present invention, the RFID label quality determining means comprises an antenna for performing communication with the RFID tag and a shield member disposed in the vicinity of the antenna for blocking electromagnetic waves, whereby the RFID label encasing the RFID tag is determined to be defective when a fault occurs during communication with the RFID tag.

By means of this constitution, a defect in the RFID label caused by a communication fault can be detected appropriately. Furthermore, the antenna can be prevented from communicating with a plurality of RFID tags simultaneously, and hence the defective RFID label can be specified with certainty.

Further, in the RFID label inspection apparatus according to the present invention, the RFID label peeling means comprises a first roller having a protrusion formed in a predetermined position on an outer peripheral portion thereof, and the RFID label is peeled away from the backing sheet by rotating the first roller such that the protrusion is pressed against a rear surface of the RFID label sheet.

By means of this constitution, when the protrusion on the first roller presses against the rear surface of the label sheet, the RFID label which is temporarily adhered to the pressing position is lifted up and peeled away from the backing sheet.

Further, in the RFID label inspection apparatus according to the present invention, the label temporary adhering means comprises a second roller, and the replacement RFID label is pressed toward the backing sheet by rotating the second roller.

Further, in the RFID label inspection apparatus according to the present invention, the label temporary adhering means comprises suction/ejection means for aspirating the replacement RFID label and ejecting the replacement RFID label onto the backing sheet in the former temporary adhesion position of the RFID label peeled away by the RFID label peeling means.

The RFID label inspection apparatus according to the present invention further comprises position detecting means for detecting the former temporary adhesion position of the RFID label peeled away by the RFID label peeling means on the backing sheet.

An RFID label inspection method according to the present invention is an inspection method for an RFID label sheet in which an RFID label encasing an RFID tag is temporarily adhered to a strip-form backing sheet at regular intervals, the said RFID label sheet having a conveyance path and comprises the steps of: determining the quality of the RFID label; peeling the RFID label away from the backing sheet when the RFID label is determined to be defective in the RFID label quality determining step; and temporarily adhering a replacement RFID label to the backing sheet in a former temporary adhesion position of the RFID label peeled away in the RFID label peeling step wherein the above steps are disposed in sequence from the upstream side of the conveyance path, characterized in that the RFID label peeling step comprises a RFID label peeling means comprising a first roller (108) having a protrusion formed in a predetermined position on an outer peripheral portion thereof, and said RFID label being peeled away from said backing sheet by rotating said first roller such that said protrusion is pressed against a rear surface of said RFID label sheet.

According to the RFID label inspection apparatus and inspection method of the present invention, a defective RFID label is peeled away from a backing sheet and a replacement RFID label is affixed to the position from which the defective RFID label has been peeled away. As a result, the RFID label yield percentage can be improved, and since an operator does not need to perform an operation to peel away the defective RFID label manually, improvements in manufacturing efficiency and operating efficiency can also be achieved.

### BRIEF DESCRIPTION OF THE DRAWINGS

Fig. 1 is a view showing the constitution of a first RFID label inspection apparatus in a normal state;
Fig. 2 is a view showing the constitution of the first RFID label inspection apparatus when a defective RFID label has been detected;
Fig. 3 is a sectional view of a backing sheet;
Fig. 4 is a top view of a label sheet;
Fig. 5 is a sectional view of the label sheet;
Fig. 6 is a view showing the constitution of a control system of the first RFID label inspection apparatus;
Fig. 7 is a view showing the constitution of a second RFID label inspection apparatus in a normal state;
Fig. 8 is a view showing the constitution of the second RFID label inspection apparatus when a defective RFID label has been detected; and
Fig. 9 is a view showing the constitution of a control system of the second RFID label inspection apparatus.

### DESCRIPTION OF THE PREFERRED EMBODIMENTS

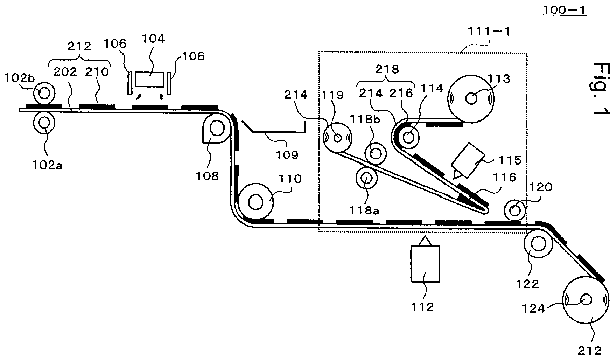

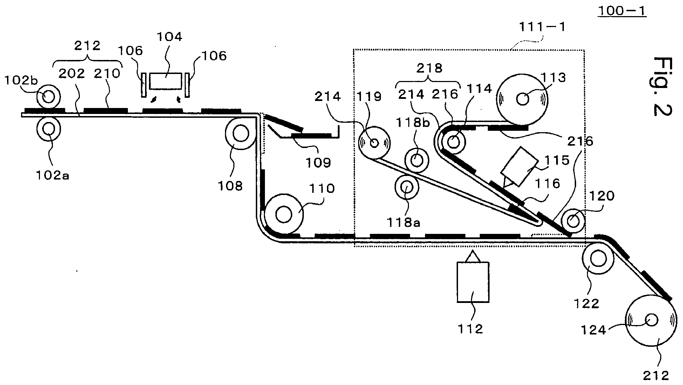

A first RFID label inspection apparatus according to an embodiment of the present invention will now be described using the drawings. Figs. 1 and 2 are views showing the constitution of a first RFID label inspection apparatus according to an embodiment of the present invention. Fig. 1 shows a normal state, and Fig. 2 shows a state in which a defective RFID label has been detected.

In an RFID label inspection apparatus 100-1 of Figs. 1 and 2, a label sheet 212 constituted by a strip-form backing sheet 202 and an RFID label 210 temporarily adhered to the backing sheet 202 at predetermined intervals is conveyed.

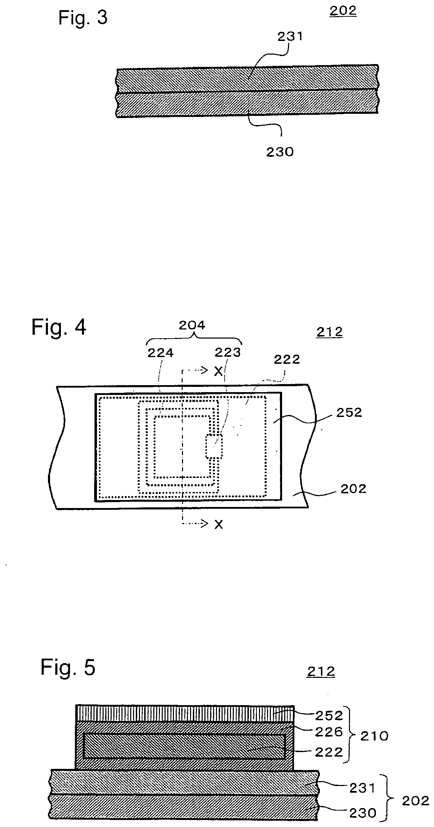

Fig. 3 is a sectional view of the backing sheet 202. As shown in the drawing, the backing sheet 202 is constituted by a base layer 230 and a silicon layer 231 disposed on the upper surface of the base layer 230. Fig. 4 is a top view of the label sheet 212 constituted by the backing sheet 202 and the RFID label 210 temporarily adhered to the backing sheet 202, and Fig. 5 is a sectional view taken along a line X-X of Fig. 4. As shown in these drawings, an RFID tag 204 is constituted by an IC chip 223 and an antenna 224, and the periphery thereof is protected by a film layer 222. A tacky layer 226 is formed on the periphery of the film layer 222, and a printing layer 252 is disposed on the upper surface of the tacky layer 226, thereby forming the RFID label 210. The label sheet 212 is formed when the RFID label 210 is temporarily adhered to the backing sheet 202.

Returning to Figs. 1 and 2, rollers 102a and 102b, a roller 110, and a roller 122 are disposed in sequence from the upstream side of a conveyance path for the label sheet 212 in the RFID label inspection apparatus 100-1. These rollers 102a, 102b, 110, and 122 are connected by a V-shaped belt not shown in the drawing, for example, and are rotated by driving a sheet conveyance motor to be described below, thereby coming into contact with the label sheet 212 so as to convey the label sheet 212 downstream.

An antenna 104 and a peeling roller 108 are disposed in sequence from the upstream side of the conveyance path for the label sheet 212 between the rollers 102a, 102b and the roller 110, and a label absence detection sensor 112 is disposed between the roller 110 and the roller 122.

The antenna 104 performs communication with the RFID tag 204 inside the RFID label 210 of the label sheet 212. A shield member 106 is disposed in the vicinity of the antenna 104 for blocking external electromagnetic waves and restricting the communication region of the antenna 104 so that communication is possible only with a single RFID tag 204.

The peeling roller 108 is formed with a protrusion in a predetermined position on the outer peripheral portion thereof. When the label sheet 212 comes into contact with the peeling roller 108, the conveyance direction of the label sheet 212 shifts such that the label sheet 212 is supplied to the roller 110 on the conveyance path. In a normal state, as shown in Fig. 1, the outer peripheral portion of the peeling roller 108 which is not formed with the protrusion contacts the rear surface of the label sheet 212. On the other hand, when a defective RFID label is detected, as shown in Fig. 2, the peeling roller 108 rotates such that the outer peripheral protrusion comes into contact with the rear surface of the label sheet 212. As a result, the RFID label 210 is lifted up from the backing sheet 202 and peeled away. A tray 109 is disposed in the vicinity of the peeling roller 108, and the RFID labels 210 that are peeled away from the backing sheet 202 are loaded onto this tray 109.

The label absence detection sensor 112 detects the absence of the RFID label 210 from the backing sheet 202. More specifically, when the RFID label 210 is peeled away from the backing sheet 202 by the peeling roller 108 as described above such that no RFID label 210 exists on the backing sheet 202 for a predetermined interval, the label absence detection sensor 112 detects the corresponding region (label absence region) of the backing sheet 202.

A wind-up shaft 124 is disposed downstream of the roller 122 on the conveyance path of the label sheet 212. The wind-up shaft 124 comprises a clutch mechanism, not shown in the drawing, which enables adjustment of the wind-up force in accordance with the wound diameter of the label sheet 212. The wind-up shaft 124 winds up the label sheet 212 steadily when a wind-up motor to be described below is driven.

An RFID label temporary adhesion mechanism 111-1 is provided with a conveyance path for a replacement label sheet 218 constituted by a strip-form backing sheet 214 and a replacement RFID label 216 temporarily adhered to the backing sheet 214 at predetermined intervals . A supply shaft 113 around which the replacement label sheet 218 is wound, a roller 114, rollers 118a and 118b, and a wind-up shaft 119, which together constitute the RFID label temporary adhesion mechanism 111-1, are disposed in sequence from the upstream side of the conveyance path for the replacement label sheet 218.

The replacement RFID label 216 has an identical structure to the RFID label 210, and is a non-defective unit in which communication failure does not occur.

The rollers 114, 118a, 118b and the wind-up shaft 119 are connected by a gear, a V-shaped belt, and so on, not shown in the drawing, and rotate when a replacement sheet conveyance motor to be described below is driven. The roller 114 contacts the replacement label sheet 218 that is fed from the supply shaft 113, and conveys the replacement label sheet 218 downstream.

A sheet detection sensor 115 and a peeling plate 116 are disposed on the conveyance path of the label sheet 212 between the roller 114 and the rollers 118a, 118b. The peeling plate 116 is disposed between the roller 114 and the rollers 118a, 118b, and between the label absence detection sensor 112 and the roller 122 on the conveyance path of the label sheet 212.

The sheet detection sensor 115 detects the end of the replacement label sheet 218, the tip end of the replacement RFID label 216 fed to the peeling plate 116, and the timing at which the replacement RFID label 216 is affixed to the backing sheet 202.

The peeling plate 116 rotates only the backing sheet 214 of the replacement label sheet 218 such that the backing sheet 214 is pulled onto the winding shaft 119. As a result, the replacement RFID label 216 is peeled away from the backing sheet 214, as shown in Fig. 2. Having been peeled away from the backing sheet 214, the replacement RFID label 216 is disposed in the label absence region of the backing sheet 202.

The rollers 118a and 118b contact the backing sheet 214 that is diverted by the peeling plate 116, and convey the backing sheet 214 downstream. The wind-up shaft 119 comprises a clutch mechanism, not shown in the drawing, which enables adjustment of the wind-up force in accordance with the wound diameter of the backing sheet 214, and winds up the backing sheet 214 accordingly.

The roller 120 in the RFID label temporary adhesion mechanism 111-1 is disposed on the conveyance path of the label sheet 212 between the peeling plate 116 and the roller 122. The roller 120 rotates as the label sheet 212 is conveyed, and presses the replacement RFID label 216 peeled away from the backing sheet 214 by the peeling plate 116 onto the backing sheet 202 side. By means of this pressure, the replacement RFID label 216 is temporarily adhered to the label absence region of the backing sheet 202.

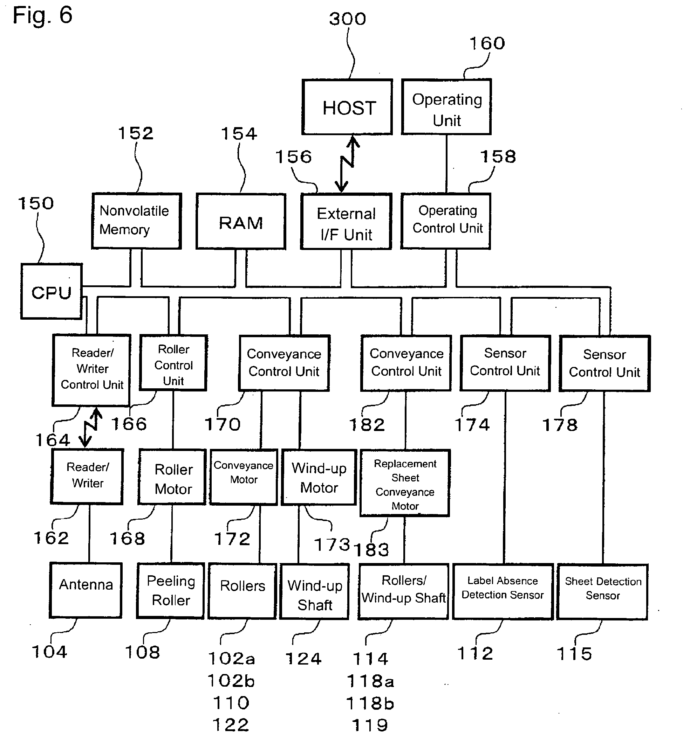

Fig. 6 is a view showing the constitution of a control system of the first RFID label inspection apparatus 100-1. In Fig. 6, a CPU 150 performs overall control of the RFID label inspection apparatus 100-1. Nonvolatile memory 152 is constituted by ROM (Read Only Memory), flash memory, or the like storing various programs executed during control of the RFID label inspection apparatus 100-1. Information and the like read from the RFID tag 204 are stored in RAM (Random Access Memory) 154. An external interface (I/F) 156 performs communication with a host 300. An operation control unit 158 controls an operating unit 160 comprising various buttons and an operating panel (not shown).

A reader/writer 162 performs communication with the RFID tag 204 via the antenna 104. A reader/writer control unit 164 performs serial communication and the like with the reader/writer 162, and controls the communication performed by the reader/writer 162. Note that the circuit of the reader/writer 162 may be incorporated into the reader/writer control unit 164.

A roller control unit 166 controls the driving of a roller motor 168 for rotating the peeling roller 108. A conveyance control unit 170 controls a conveyance motor 172 which drives the rollers 102a, 102b, 110, and 122 for conveying the label sheet 212, and a wind-up motor 173 which drives the wind-up shaft 124 for winding up the label sheet 212. A conveyance control unit 182 controls a replacement sheet conveyance motor 183 which drives the rollers 114, 118a, 118b for conveying the replacement label sheet 218 and the wind-up shaft 119 for winding up the backing sheet 214 of the replacement label sheet 218. A sensor control unit 174 controls the label absence detection sensor 112. Similarly, a sensor control unit 178 controls the sheet detection sensor 115.

Next, an operational example of the first RFID label inspection apparatus 100-1 will be described.

First, during conveyance of the label sheet 212 constituted by the backing sheet 202 and the RFID label 210, the CPU 150 instructs the reader/writer control unit 164 to communicate with the RFID tag 204 in the RFID label 210. In response to this instruction, the reader/writer control unit 164 transmits a read signal to the RFID tag 204 via the reader/writer 162 and the antenna 104. Having received the read signal, the RFID tag 204 transmits information stored in the storage memory of the internal IC chip 223. Upon reception of this information via the antenna 104, the reader/writer 162 outputs the information to the reader/writer control unit 164. The CPU 150 determines whether or not the RFID label 210 serving as the communication target of the antenna 104 is defective based on whether or not the information is obtained from the reader/writer control unit 164. Here, when the information is obtained from the reader/writer control unit 164, the CPU 150 determines that the RFID label 210 is non-defective, and when the information cannot be obtained, the CPU 150 determines that the RFID label 210 is defective.

When the RFID label 210 is defective, the CPU 150 instructs the roller control unit 166 to drive the roller motor 168. Here, the CPU 150 instructs the roller control unit 166 to drive the roller motor 168 at an appropriate timing based on the conveyance speed of the label sheet 212, the distance between the antenna 104 and the peeling roller 108, and the rotation speed of the peeling roller 108, such that when the defective RFID label 210 reaches the peeling roller 108, the protrusion on the outer peripheral portion of the peeling roller 108 comes into contact with the rear surface of the label sheet 212 at the position in which the defective RFID label 210 is temporarily adhered.

In response to this instruction from the CPU 150, the roller control unit 166 drives the roller motor 168. Thus, as shown in Fig. 2, the peeling roller 108 rotates such that the protrusion on the outer peripheral portion thereof comes into contact with the rear surface of the label sheet 212 at the position in which the defective RFID label 210 is temporarily adhered. As a result, the defective RFID label 210 is lifted up and peeled away from the backing sheet 202 and loaded onto the tray 109.

Next, the CPU 150 determines whether or not the label absence detection sensor 112 has detected the absence of the RFID label 210 from the backing sheet 202. Since the defective RFID label 210 has been peeled away from the backing sheet 202 by the peeling roller 108, the label absence detection sensor 112 detects the corresponding label absence region on the backing sheet 202 when the label absence region reaches the label absence detection sensor 112. Detection information generated by the label absence detection sensor 112 is transmitted to the CPU 150 via the sensor control unit 174, and from this detection information the CPU 150 is able to confirm that the absence of the RFID label 210 from the backing sheet 202 has been detected by the label absence detection sensor 112.

When the absence of the RFID label 210 from the backing sheet 202 is detected by the label absence detection sensor 112, the CPU 150 instructs the conveyance control unit 182 to drive the replacement sheet conveyance motor 183 such that the replacement label sheet 218 wound around the supply shaft 113 is fed in a length corresponding to the arrangement interval of the replacement RFID labels 216 on the backing sheet 214. Here, the CPU 150 instructs the conveyance control unit 182 to drive the replacement sheet conveyance motor 183 at an appropriate timing based on the conveyance speed of the label sheet 212, the distance between the label absence detection sensor 112 and the peeling plate 116, the conveyance speed of the replacement label sheet 218, the timing at which the tip end of the replacement RFID label 216 is detected by the sheet detection sensor 115, and the distance between the sheet detection sensor 115 and the peeling plate 116, such that the replacement RFID label 216 peeled away from the backing sheet 214 by the peeling plate 116 is disposed in the label absence region of the backing sheet 202.

In response to this instruction from the CPU 150, the conveyance control unit 182 drives the replacement sheet conveyance motor 182. Thus, as shown in Fig. 2, the rollers 114, 118a, 118b and the wind-up shaft 119 rotate such that the replacement label sheet 218 wound around the supply shaft 113 is fed in a length corresponding to the arrangement interval of the replacement RFID labels 216 on the backing sheet 214, and also such that the backing sheet 214 of the replacement label sheet 218 is diverted by the peeling plate 116 and wound onto the wind-up shaft 119. Thus a single replacement RFID label 216 is peeled away from the backing sheet 214 by the peeling plate 116 and disposed in the label absence region of the backing sheet 202. The replacement RFID label 216 is then pressed onto the backing sheet 202 side by the roller 120 and thereby temporarily adhered to the label absence region.

Note that in this embodiment, the timing for bringing the outer peripheral protrusion of the peeling roller 108 into contact with the rear surface of the label sheet 212 at the temporary adhesion position of the defective RFID label 210 following detection of the defective RFID label 210 through the communication of the antenna 104, and the timing at which the RFID label temporary adhesion mechanism 111-1 feeds the replacement label 216 toward the backing sheet 202 following detection by the label absence detection sensor 112 of the absence of the RFID label 210 from the backing sheet 202 (the position on the backing sheet 202 from which the defective RFID label 210 is peeled away by the peeling roller 108 following determination in the preceding process of the defect in the RFID label 210 serving as the communication target of the antenna 104), may be stored in the nonvolatile memory 152 in advance and read by the CPU 150 during an operation, or may be modified appropriately by setting timer values through manipulation of a volume or key, not shown in the drawing, on the operating unit 160.

According to the first RFID label inspection apparatus 100-1, an RFID label 210 which is deemed to be defective due to a communication fault is peeled away from the backing sheet 202 when the peeling roller 108 rotates, and a non-defective replacement RFID label 216 is temporarily adhered to the label absence region on the backing sheet 202. As a result, the RFID label yield percentage of the end-product label sheet 212 is improved. Furthermore, an operator does not need to perform an operation to peel away the defective RFID label 210 manually, and hence improvements in manufacturing efficiency and operating efficiency can also be achieved.

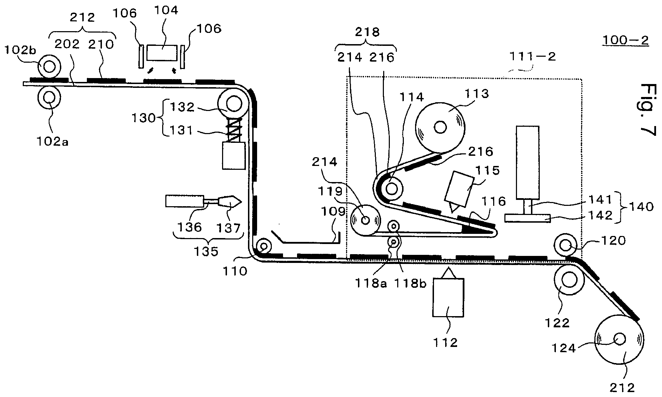

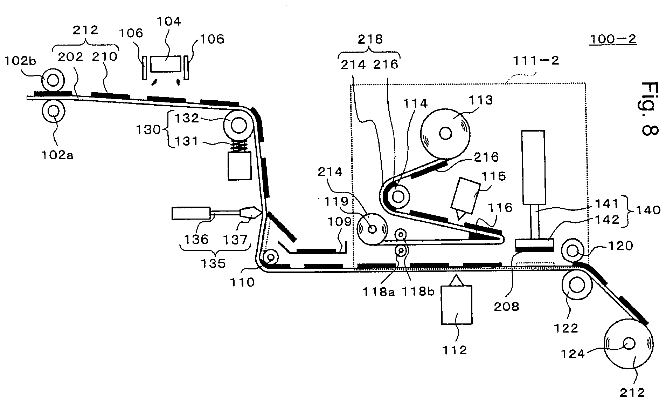

Next, a second RFID label inspection apparatus according to an embodiment of the present invention will be described using the drawings. Figs. 7 and 8 are views showing the constitution of a second RFID label inspection apparatus according to an embodiment of the present invention. Fig. 7 shows a normal state, and Fig. 8 shows a state in which a defect has occurred in an RFID label.

Comparing a second RFID label inspection apparatus 100-2 with the first RFID label inspection apparatus 100-1, the second RFID label inspection apparatus 100-2 comprises a tension adjustment mechanism 130, a peeling mechanism 135, and an air cylinder 140, but does not comprise the peeling roller 108.

The tension adjustment mechanism 130 and peeling mechanism 135 are disposed in sequence from the upstream side of the conveyance path for the label sheet 212 between the antenna 104 and the roller 110.

The tension adjustment mechanism 130 is constituted by a spring 131 and a roller 132 attached to the tip end of the spring 131. The conveyance direction of the label sheet 212 is switched when the roller 132 comes into contact with the label sheet 212. The peeing mechanism 135 is constituted by a rod-form cylinder 136 and a peeling plate 137 attached to the tip end of the cylinder 136.

Normally, as shown in Fig. 7, the cylinder 136 of the peeling mechanism 135 is withdrawn and not in contact with the label sheet 212, while the spring 131 of the tension adjustment mechanism 130 is expanded. On the other hand, when a defective RFID label is detected, the cylinder 136 of the peeling mechanism 135 advances as shown in Fig. 8 such that the peeling plate 137 contacts the rear surface of the label sheet 212. At this time, the tension of the label sheet 212 is raised by the advancement of the peeling plate 137, but the spring 131 of the tension adjustment mechanism 130 contracts, thereby alleviating the tension of the label sheet 212. When the peeling plate 137 contacts the rear surface of the label sheet 212, the backing sheet 202 bends, and as a result, the RFID label 210 is lifted up and peeled away from the backing sheet 202. Having been peeled away from the backing sheet 202, the RFID label 210 is loaded onto the tray 109.

The air cylinder 140 is provided in an RFID label temporary adhesion mechanism 111-2 on the conveyance path of the label sheet 212 between the peeling plate 116 and the roller 122. The air cylinder 140 is constituted by a cylinder 141 and an air ejection/suction unit 142 attached to the tip end of the cylinder 141. Normally, as shown in Fig. 7, the air ejection/suction unit 142 does not eject or take in air. On the other hand, when a defective RFID label is detected, the air ejection/suction unit 142 takes in air such that the replacement RFID label 216 peeled away from the backing sheet 214 by the peeling plate 116 is aspirated thereto, as shown in Fig. 8. The cylinder 141 then advances and the air ejection/suction unit 142 ejects air, whereby the replacement RFID label 216 is disposed in the label absence region on the backing sheet 202.

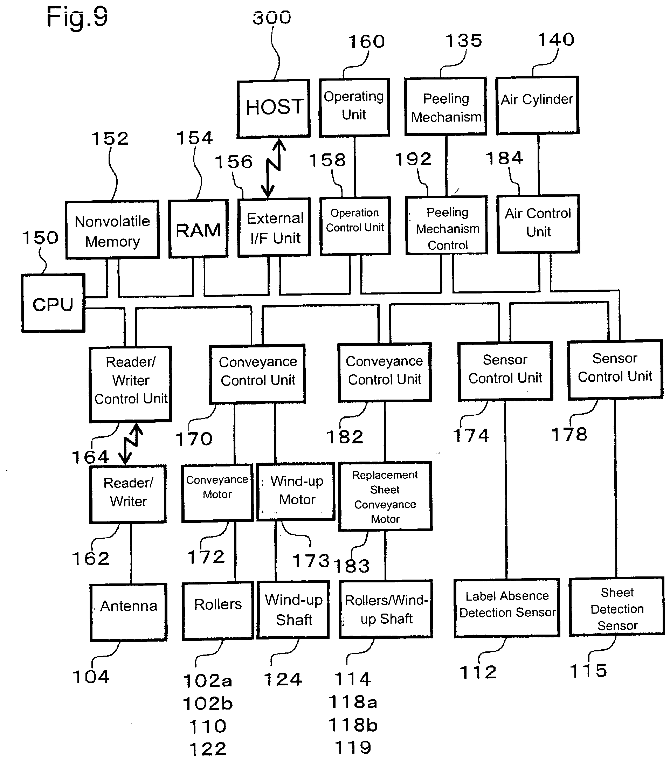

Fig. 9 is a view showing the constitution of a control system of the second RFID label inspection apparatus 100-2. Comparing the control system of the second RFID label inspection apparatus 100-2 with the control system of the first RFID label inspection apparatus 100-1, the control system of the second RFID label inspection apparatus 100-2 comprises a peeling mechanism control unit 192 for controlling driving of the peeling mechanism 135 and an air control unit 184 for controlling driving of the air cylinder 140, but does not comprise the roller control unit 166.

Next, an operational example of the second RFID label inspection apparatus 100-2 will be described.

First, during conveyance of the label sheet 212 constituted by the backing sheet 202 and the RFID label 210, the CPU 150 determines whether or not the RFID label 210 serving as the communication target of the antenna 104 is defective.

When the RFID label 210 is defective, the CPU 150 instructs the peeling mechanism control unit 192 to drive the peeling mechanism 135. Here, the CPU 150 instructs the peeling mechanism control unit 192 to drive the peeling mechanism 135 at an appropriate timing based on the distance between the antenna 104 and the peeling mechanism 135, the conveyance speed of the label sheet 212, and the advancement speed of the cylinder 136 in the peeling mechanism 135, such that the peeling plate 137 comes into contact with the label sheet 212 as the defective RFID label 210 reaches the peeling mechanism 135.

In response to this instruction from the CPU 150, the tension adjustment mechanism 180 drives the tension adjustment mechanism 130. Similarly, in response to this instruction from the CPU 150, the peeling mechanism control unit 192 drives the peeling mechanism 135. Thus, as shown in Fig. 8, the cylinder 136 in the peeling mechanism 135 advances as the defective RFID label 210 reaches the peeling mechanism 135 such that the peeling plate 137 comes into contact with the rear surface of the label sheet 212, and the spring 131 of the tension adjustment mechanism 130 contracts such that the tension of the label sheet 212 is alleviated. As a result, the defective RFID label 210 is lifted up and peeled away from the backing sheet 202, and loaded onto the tray 109.

Next, the CPU 150 determines whether or not the label absence detection sensor 112 has detected the absence of the RFID label 210 from the backing sheet 202.

When the absence of the RFID label 210 from the backing sheet 202 has been detected by the label absence detection sensor 112, the CPU 150 instructs the conveyance control unit 182 to drive the replacement sheet conveyance motor 183 and instructs the air cylinder 140 to take in air. In response to this instruction, the conveyance control unit 182 drives the replacement sheet conveyance motor 183. Thus, as shown in Fig. 8, the rollers 114, 118a, 118b and the wind-up shaft 119 rotate such that the replacement label sheet 218 wound around the supply shaft 113 is fed in a length corresponding to the arrangement interval of the replacement RFID labels 216 on the backing sheet 214, and also such that the backing sheet 214 of the replacement label sheet 218 is diverted by the peeling plate 116 and wound onto the wind-up shaft 119. Thus a single replacement RFID label 216 is peeled away from the backing sheet 214 by the peeling plate 116. Meanwhile, the air ejection/suction unit 142 of the air cylinder 140 takes in air in response to the instruction from the CPU 150, and thereby aspirates the replacement RFID label 216 that has been peeled away from the backing sheet 214 by the peeling plate 116. Next, the cylinder 141 advances and the air ejection/suction unit 142 ejects air, whereby the replacement RFID label 216 is disposed in the label absence region of the backing sheet 202. Further, the replacement RFID label 216 is pressed onto the backing sheet 202 side by the roller 120 and thereby temporarily adhered to the label absence region.

Note that in this embodiment, the timing at which the cylinder 136 in the peeling mechanism 135 advances such that the peeling plate 137 contacts the rear surface of the label sheet 212 at the position of the defective RFID label 210 following detection of the defective RFID label 210 through the communication of the antenna 104, and the timing at which the RFID label temporary adhesion mechanism 111-2 feeds the replacement label 216 toward the backing sheet 202 following detection by the label absence detection sensor 112 of the absence of the RFID label 210 from the backing sheet 202 (the position on the backing sheet 202 from which the defective RFID label 210 is peeled away by the peeling plate 137 following determination in the preceding process of the defect in the RFID label 210 serving as the communication target of the antenna 104), may be stored in the nonvolatile memory 152 in advance and read by the CPU 150 during an operation, or may be modified appropriately by setting timer values through manipulation of a volume or key, not shown in the drawing, on the operating unit 160.

According to the second RFID label inspection apparatus 100-2, an RFID label 210 which is deemed to be defective due to a communication fault is peeled away from the backing sheet 202 when the cylinder 136 of the peeling mechanism 135 advances, and by driving the air cylinder 140, a non-defective replacement RFID label 216 is disposed in, and temporarily adhered to, the label absence region on the backing sheet 202. As a result, the RFID label yield percentage of the end-product label sheet 212 is improved. Furthermore, an operator does not need to perform an operation to peel away the defective RFID label 210 manually, and hence improvements in manufacturing efficiency and operating efficiency can also be achieved. Moreover, when peeling the defective RFID label 210 away from the backing sheet 202, the tension of the backing sheet 202 is alleviated by the tension adjustment mechanism 130, and therefore breakage of the backing sheet 202, caused by an increase in tension when the cylinder 136 of the peeling mechanism 135 advances, is prevented.

Note that in the embodiments described above, the CPU 150 instructs the conveyance control unit 182 to drive the replacement sheet conveyance motor 183 when the absence of an RFID label 210 from the backing sheet 202 is detected by the label absence sensor 112, but the CPU 150 may instruct the conveyance control unit 182 to drive the replacement sheet conveyance motor 183 when the RFID label 210 serving as the communication target of the antenna 104 is determined to be defective. In this case, the CPU 150 instructs the conveyance control unit 182 to drive the replacement sheet conveyance motor 183 at an appropriate timing based on the conveyance speed of the label sheet 212, the distance between the antenna 104 and the peeling plate 116, the conveyance speed of the replacement label sheet 218, the timing at which the tip end of the replacement RFID label 216 is detected by the sheet detection sensor 115, and the distance between the sheet detection sensor 115 and the peeling plate 116, such that the replacement RFID label 216 peeled away from the backing sheet 214 by the peelingplate 116 is disposed in the label absence region of the backing sheet 202.

The present invention may be applied similarly to a constitution in which the second RFID label inspection apparatus 100-2 comprises the peeling roller 108 of the first RFID label inspection apparatus 100-1 in place of the tension adjustment mechanism 130 and peeling mechanism 135.

Further, in the embodiments described above, the label sheet 212 is conveyed using the peeling roller 108, the roller 132, and the roller 110 on the conveyance path of the label sheet 212. However, when the conveyance path of the label sheet 212 is formed to be flat, a rotatable tacky roller which advances and retreats in the space above the label sheet 212 and has an adhesive coated onto its outer periphery may be provided downstream of the antenna 104 on the conveyance path of the label sheet 212 as RFID label peeling means. Accordingly, when the defective RFID label 210 is detected by the antenna 104, the tacky roller is caused to advance so that it comes into contact with the defective RFID label 210 and peels the defective RFID label 210 away from the backing sheet 202. Thus, the RFID label peeling means can be modified appropriately in alignment with the conveyance mode of the label sheet 212.

Moreover, the RFID label inspection apparatus may be provided in the post-process of an RFID label production line or as a stand-alone device for inspecting an end-product, wound RFID label sheet. In the latter case, introduction costs can be held to a minimum, and various other effects, such as improvements in the RFID label yield percentage, manufacturing efficiency, and operating efficiency, can of course also be achieved.

## Claims

1. An RFID label inspection apparatus for inspecting an RFID label sheet (212) in which an RFID label (210) encasing an RFID tag (204) is temporarily adhered to a strip-form backing sheet (202) at regular intervals, comprising:
a conveyance path for the RFID label sheet (212),
RFID label quality determining means (104, 150) for determining the quality of said RFID label (210);
RFID label peeling means (108, 135) for peeling said RFID label away from said backing sheet (202) when said RFID label (210) is determined to be defective by said RFID label quality determining means (104, 150); and
RFID label temporary adhering means (111-1) for temporarily adhering a replacement RFID label (216) to said backing sheet in a former temporary adhesion position of said RFID label peeled away by said RFID label peeling means; wherein the RFID label quality determining means (104, 150) the RFID label peeling means (108, 135) and the RFID label temporary adhering means (111-1) are disposed in sequence from the upstream side of the conveyance path, **characterized in that** said RFID label peeling means comprises a first roller (108) having a protrusion formed in a predetermined position on an outer peripheral portion thereof, and said RFID label is peeled away from said backing sheet by rotating said first roller such that said protrusion is pressed against a rear surface of said RFID label sheet.

2. The RFID label inspection apparatus according to claim 1, wherein said RFID label quality determining means comprises an antenna (104) for performing communication with said RFID tag and a shield member (106) disposed in the vicinity of said antenna for blocking electromagnetic waves, whereby said RFID label encasing said RFID tag is determined to be defective when a fault occurs during communication with said RFID tag.

3. The RFID label inspection apparatus according to any of claims 1 through 2 , wherein said label temporary adhering means comprises a second roller (114), and said replacement RFID label is pressed toward said backing sheet by rotating said second roller.

4. The RFID label inspection apparatus according to any of claims 1 through 2, wherein said label temporary adhering means comprises suction/ejectionmeans (140) for aspirating said replacement RFID label and ejecting said replacement RFID label onto said backing sheet in said former temporary adhesion position of said RFID label peeled away by said RFID label peeling means.

5. The RFID label inspection apparatus according to any of claims 1 through 4, further comprising position detecting means (112) for detecting said former temporary adhesion position of said RFID label peeled away by said RFID label peeling means on said backing sheet.

6. An RFID label inspection method for inspecting an RFID label sheet (212) in which an RFID label (210) encasing an RFID tag (204) is temporarily adhered to a strip-form backing sheet (202) at regular intervals, the said RFID label sheet having a conveyance path, the method comprising the steps of:
determining the quality of said RFID label (210);
peeling said RFID label (210) away from said backing sheet when said RFID label (210) is determined to be defective in said RFID label quality determining step; and
temporarily adhering a replacement RFID label (216) to said backing sheet (202) in a former temporary adhesion position of said RFID label (210) peeled away in said RFID label peeling step; wherein the above steps are disposed in sequence from the upstream side of the conveyance path **characterized in that** the RFID label peeling step comprises a RFID label peeling means comprising a first roller (108) having a protrusion formed in a predetermined position on an outer peripheral portion thereof, and said RFID label being peeled away from said backing sheet by rotating said first roller such that said protrusion is pressed against a rear surface of said RFID label sheet.

## Patentansprüche

1. RFID-Etikettenprüfvorrichtung zum Prüfen einer RFID-Etikettenfolie (212), bei der ein RFID-Etikett (210), das ein RFID-Tag (204) umhüllt, in regelmäßigen Abständen auf eine streifenförmige Trägerfolie (202) temporär geklebt ist, umfassend:
einen Transportpfad für die RFID-Etikettenfolie (212),
ein RFID-Etikettenqualitätsbestimmungsmittel (104, 150) zum Bestimmen der Qualität des RFID-Etiketts (210);
ein RFID-Etikettenablösmittel (108, 135) zum Ablösen des RFID-Etiketts von der Trägerfolie (202), wenn durch das RFID-Etikettenqualitätsbestimmungsmittel (104, 150) bestimmt wurde, dass das RFID-Etikett (210) fehlerhaft ist; und
ein RFID-Etiketten-Temporärklebemittel (111-1) zum temporären Kleben von Ersatz-RFID-Etiketten (216) auf die Trägerfolie an einer vorherigen temporären Klebeposition des RFID-Etiketts, das durch das RFID-Etikettenablösmittel abgelöst wurde; wobei das RFID-Etikettenqualitätsbestimmungsmittel (104, 150), das RFID-Etikettenablösmittel (108, 135) und das RFID-Etiketten-Temporärklebemittel (111-1) der Reihe nach von der stromaufwärts gelegenen Seite des Transportpfads angeordnet sind, **dadurch gekennzeichnet, dass** das RFID-Etikettenablösmittel einen ersten Rollenkörper (108) enthält, der eine Erhebung besitzt, die an einer vorgegebenen Position an einem Außenumfangsabschnitt davon gebildet ist, und das RFID-Etikett von der Trägerfolie gelöst wird durch Drehen des ersten Rollenkörpers derart, dass die Erhebung gegen eine Rückseite der RFID-Etikettenfolie gedrückt wird.

2. RFID-Etikettenprüfvorrichtung nach Anspruch 1, wobei das RFID-Etikettenqualitätsbestimmungsmittel eine Antenne (104) zum Durchführen von Kommunikation mit dem RFID-Tag und ein Abschirmelement (106), das zum Blockieren elektromagnetischer Wellen in der Nähe der Antenne angeordnet ist, enthält, wobei bestimmt wird, dass das RFID-Etikett, das das RFID-Tag umhüllt, fehlerhaft ist, wenn während der Kommunikation mit dem RFID-Tag ein Fehler auftritt.

3. RFID-Etikettenprüfvorrichtung nach einem der Ansprüche 1 bis 2, wobei das Etiketten-Temporärklebemittel einen zweiten Rollenkörper (114) enthält und das Ersatz-RFID-Etikett durch Drehen des zweiten Rollenkörpers auf die Trägerfolie gedrückt wird.

4. RFID-Etikettenprüfvorrichtung nach einem der Ansprüche 1 bis 2, wobei das Etiketten-Temporärklebemittel ein Saug-/Auswurfmittel (140) zum Ansaugen des Ersatz-RFID-Etiketts und Auswerfen des Ersatz-RFID-Etiketts auf die Trägerfolie an der vorherigen temporären Klebeposition des RFID-Etiketts, das durch das RFID-Etikettenablösmittel abgelöst wurde.

5. RFID-Etikettenprüfvorrichtung nach einem der Ansprüche 1 bis 4, die ferner ein Positionsdetektionsmittel (112) zum Detektieren der vorherigen temporären Klebeposition des RFID-Etiketts, das durch das RFID-Etikettenablösmittel abgelöst wurde, auf der Trägerfolie umfasst.

6. RFID-Etikettenprüfverfahren zum Prüfen einer RFID-Etikettenfolie (212), in der ein RFID-Etikett (210), das ein RFID-Tag (204) umhüllt, in regelmäßigen Abständen an eine streifenförmige Trägerfolie (202) temporär geklebt ist, wobei die RFID-Etikettenfolie einen Transportpfad besitzt und wobei das Verfahren die folgenden Schritte umfasst:
Bestimmen der Qualität des RFID-Etiketts (210);
Ablösen des RFID-Etiketts (210) von der Trägerfolie, wenn in dem RFID-Etikettenqualitätsbestimmungsschritt bestimmt wird, dass das RFID-Etikett (210) fehlerhaft ist; und
temporäres Kleben von Ersatz-RFID-Etiketten (216) auf die Trägerfolie (202) an einer vorherigen temporären Klebeposition des RFID-Etiketts (210), das in dem RFID-Etikettenablösschritt abgelöst wurde; wobei die obigen Schritte der Reihe nach von der stromaufwärts gelegenen Seite des Transportpfads angeordnet sind, **dadurch gekennzeichnet, dass** der RFID-Etikettenablösschritt ein RFID-Etikettenablösmittel umfasst, das einen ersten Rollenkörper (108) enthält, das eine Erhebung besitzt, der an einer vorgegebenen Position an einem Außenumfangsabschnitt davon gebildet ist, und das RFID-Etikett von der Trägerfolie abgelöst wird durch Drehen des ersten Rollenkörpers derart, dass die Erhebung gegen eine Rückseite der RFID-Etikettenfolie gedrückt wird.

## Revendications

1. Appareil d'inspection d'étiquette RFID destiné à inspecter une feuille d'étiquettes RFID (212) sur laquelle une étiquette RFID (210) qui contient un marqueur RFID (204) est provisoirement collée sur une feuille de support en forme de bande (202) à des intervalles réguliers, comprenant :
un trajet d'acheminement de la feuille d'étiquettes RFID (212),
un moyen de détermination de qualité d'étiquette RFID (104, 150) destiné à déterminer la qualité de ladite étiquette RFID (210) ;
un moyen de décollement d'étiquette RFID (108, 135) destiné à décoller ladite étiquette RFID de ladite feuille de support (202) lorsque ladite étiquette RFID (210) est déterminée comme étant défectueuse par ledit moyen de détermination de qualité d'étiquette RFID (104, 150) ; et
un moyen de collage provisoire d'étiquette RFID (111-1) destiné à coller provisoirement une étiquette RFID de remplacement (216) sur ladite feuille de support dans une position de collage provisoire précédente de ladite étiquette RFID décollée par ledit moyen de décollement d'étiquette RFID ; dans lequel le moyen de détermination de qualité d'étiquette RFID (104, 150), le moyen de décollement d'étiquette RFID (108, 135) et le moyen de collage provisoire d'étiquette RFID (111-1) sont disposés dans cet ordre depuis le côté amont du trajet d'acheminement, **caractérisé en ce que** ledit moyen de décollement d'étiquette RFID comprend un premier rouleau (108) ayant une saillie formée à un emplacement prédéterminé sur une partie périphérique extérieure de celui-ci, et ladite étiquette RFID est décollée de ladite feuille de support en faisant tourner ledit premier rouleau de sorte que ladite saillie soit appuyée contre une surface arrière de ladite feuille d'étiquettes RFID.

2. Appareil d'inspection d'étiquette RFID selon la revendication 1, dans lequel ledit moyen de détermination de qualité d'étiquette RFID comprend une antenne (104) destinée à effectuer une communication avec ledit marqueur RFID et un élément de protection (106) disposé à proximité de ladite antenne afin de bloquer les ondes électromagnétiques, moyennant quoi ladite étiquette RFID qui contient ledit marqueur RFID est déterminée comme étant défectueuse lorsqu'une défaillance se produit pendant la communication avec ledit marqueur RFID.

3. Appareil d'inspection d'étiquette RFID selon l'une quelconque des revendications 1 à 2, dans lequel ledit moyen de collage provisoire d'étiquette comprend un second rouleau (114), et ladite étiquette RFID de remplacement est appuyée contre ladite feuille de support en faisant tourner ledit second rouleau.

4. Appareil d'inspection d'étiquette RFID selon l'une quelconque des revendications 1 à 2, dans lequel ledit moyen de collage provisoire d'étiquette comprend un moyen d'aspiration/d'éjection (140) destiné à aspirer ladite étiquette RFID de remplacement et à éjecter ladite étiquette RFID de remplacement sur ladite feuille de support dans ladite position de collage provisoire précédente de ladite étiquette RFID décollée par ledit moyen de décollement d'étiquette RFID.

5. Appareil d'inspection d'étiquette RFID selon l'une quelconque des revendications 1 à 4, comprenant en outre un moyen de détection de position (112) destiné à détecter ladite position de collage provisoire précédente de ladite étiquette RFID décollée par ledit moyen de décollement d'étiquette RFID sur ladite feuille de support.

6. Procédé d'inspection d'étiquette RFID destiné à inspecter une feuille d'étiquettes RFID (212) sur laquelle une étiquette RFID (210) qui contient un marqueur RFID (204) est provisoirement collée sur une feuille de support en forme de bande (202) à des intervalles réguliers, ladite feuille d'étiquettes RFID ayant un trajet d'acheminement, le procédé comprenant les étapes consistant à :
déterminer la qualité de ladite étiquette RFID (210) ;
le décollement de ladite étiquette RFID (210) de ladite feuille de support lorsque ladite étiquette RFID (210) est déterminée comme étant défectueuse à ladite étape de détermination de qualité d'étiquette RFID ; et
le collage provisoire d'une étiquette RFID de remplacement (216) sur ladite feuille de support (202) dans une position de collage provisoire précédente de ladite étiquette RFID (210) décollée à ladite étape de décollement d'étiquette RFID; dans lequel les étapes ci-dessus sont prévues dans cet ordre depuis le côté amont du trajet d'acheminement, **caractérisé en ce que** l'étape de décollement d'étiquette RFID comprend un moyen de décollement d'étiquette RFID comprenant un premier rouleau (108) ayant une saillie formée à un emplacement prédéterminé sur une partie périphérique extérieure de celui-ci, et ladite étiquette RFID étant décollée de ladite feuille de support en faisant tourner ledit premier rouleau de sorte que ladite saillie soit appuyée contre une surface arrière de ladite feuille d'étiquettes RFID.
